# FASCICULE DE BREVET EUROPEEN

(11) **EP 2 270 259 B1**
(45) Date de publication et mention de la délivrance du brevet: **07.12.2011**
(21) Numéro de dépôt: 10354031.6
(22) Date de dépôt: 15.06.2010
(51) Int. Cl.: C23F 4/00

(54) **Procédé d'élimination de lithium métallique**
Verfahren zur Entfernung von metallischem Lithium
Method of eliminating metallic lithium

(30) Priorité: 24.06.2009 FR 0903069
(43) Date de publication de la demande: 05.01.2011
(73) Titulaire: Commissariat à l'Énergie Atomique et aux Énergies Alternatives, 75015 Paris (FR)
(72) Inventeur: Oukassi, Sami, 38120 Saint-Egrève (FR); Le Van-Jodin, Lucie, 38000 Grenoble (FR); Salot, Raphaël, 38250 Lans-en-Vercors (FR)
(74) Mandataire: de Jong, Jean Jacques

(56) Documents cités:
- EP-A- 0 715 366
- US-A- 5 705 443
- US-A- 6 121 161
- US-A1- 2005 079 418
- US-A1- 2005 236 374
- US-B1- 6 207 326
- WHYTE D G ET AL: "Experimental observations of lithium as a plasma-facing surface in the DIII-D tokamak divertor" FUSION ENGINEERING AND DESIGN, ELSEVIER SCIENCE PUBLISHERS, AMSTERDAM, NL, vol. 72, no. 1-3, 1 novembre 2004 (2004-11-01), pages 133-147, XP004611682 ISSN: 0920-3796
- H.HU, R. RICKEN, W.SOHLER: "Etching of lithium niobate: micro- and nanometer structures for integrated optics" TOPICAL MEETING "PHOTOREACTIVE MATERIALS, EFFECTS, AND DEVICES, 1 juin 2009 (2009-06-01), XP008118586 Bad Honnef
- M.J. NEUMANN, R.A. DEFREES, D. N. RUZIC, O. K. A. ERSHOV, R. L. BRISTOL: "Plasma cleaning of lithium off of collector optics material for use in extreme ultraviolet lithography applications" J. MICRO/NANOLITH.MEMS MOEMS, vol. 6(2), avril 2007 (2007-04), - juin 2007 (2007-06) XP008118587

## Description

### Domaine technique de l'invention

L'invention concerne un procédé d'élimination de lithium métallique sur un support, comprenant une étape d'application d'un plasma.

### État de la technique

Une technique couramment employée pour la fabrication de micro-batteries consiste à déposer successivement les couches minces de la micro-batterie par des techniques de dépôt sous vide, PVD par exemple (« Physical Vapor Deposition »), à travers des masques mécaniques présentant des évidements. Le masque est posé sur le substrat et maintenu en position pendant la durée du dépôt. Après le dépôt, le masque mécanique est retiré et le substrat présente les motifs souhaités. Cette étape est répétée autant de fois que nécessaire afin de former le dispositif final en couches minces.

L'utilisation d'une telle technique requiert une maîtrise des protocoles d'entretien des masques et notamment l'étape de nettoyage. L'optimisation de cette étape respecte certains critères notamment de non dégradation des masques, rendement et temps de procédé. Dans le cas de la fabrication de micro-batteries au lithium, un autre critère, de sécurité, s'ajoute aux précédents. Le nettoyage s'applique aux masques présentant du lithium métallique en surface, matériau très instable au contact de l'air et de l'humidité. La réactivité de la couche de lithium est proportionnelle à la quantité présente sur le masque, quantité d'autant plus grande que la cadence de production est grande. Le nettoyage de ce masque à l'aide d'eau constitue un risque conséquent en terme de sécurité en raison de l'instabilité du lithium en présence d'humidité.

La demande de brevet EP1845065 décrit un procédé d'obtention d'un oxyde de métal de transition lithié ou surlithié. Il comprend une étape de dissolution d'un film de lithium métallique dans une solution à base d'alcool lourd. A titre d'exemple, la dissolution de 3g de lithium métallique est réalisée dans une solution de pentanol à température ambiante, la réaction étant totale au bout de deux heures. Cette méthode présente les inconvénients suivants : le transfert du lithium métallique depuis le bâti de dépôt jusqu'au bain de dissolution cause un risque de contact entre le lithium et l'air et la durée d'un tel procédé est relativement importante. De plus, cette méthode est lourde à mettre en oeuvre et non adaptée au nettoyage d'un masque.

L'article « Plasma cleaning of lithium off of collector optics material for use in extreme ultraviolet lithography applications » (J. Micro/Nanolith. MEMS MOEMS 6(2), 023005, 2007) décrit un procédé de nettoyage du lithium sur des collecteurs optiques par application d'un plasma à base d'hélium. Le plasma est généré à partir d'hélium par un dispositif comprenant une alimentation à une fréquence radio de 13,56MHz. Le plasma hélium est utilisé pour pulvériser le lithium présent à la surface de miroirs optiques utilisés en lithographie extrême ultraviolet. Une couche de lithium métallique de faible épaisseur sur un substrat en verre est ainsi éliminée par application d'un plasma radiofréquence à une température de 400°C. Néanmoins, ce procédé est lent et n'est pas adapté à toutes les épaisseurs de couches de lithium.

### Objet de l'invention

L'invention a pour but un procédé d'élimination du lithium métallique remédiant aux inconvénients de l'art antérieur. Plus particulièrement, l'invention a pour but un procédé d'élimination facile à mettre en oeuvre, simple d'utilisation et rapide.

Selon l'invention, ce but est atteint par le fait que le plasma est formé à partir d'une source de carbone et d'une source d'oxygène et transforme le lithium en carbonate de lithium et en ce que le procédé comporte une étape de dissolution du carbonate de lithium dans l'eau.

### Description de modes particuliers de réalisation

Le procédé consiste à appliquer un plasma qui va réagir chimiquement avec le lithium métallique disposé sur un support. Le lithium se transforme alors en un composé stable à l'air, facile à éliminer, de préférence en le dissolvant dans de l'eau.

L'application du plasma sur un support comprenant du lithium métallique en surface peut avoir lieu dans une enceinte similaire à celle des appareillages de dépôt chimique par phase vapeur assisté par plasma (« Plasma-Enhanced Chemical Vapor Deposition », PECVD). Des gaz réactifs contenant des espèces chimiques sont employés et injectés dans un tel dispositif. Le dispositif comporte généralement une source d'alimentation de courant alternatif de type radiofréquence, qui crée un champ électromagnétique. Ce champ ionise une partie des atomes des espèces chimiques présentes dans les gaz et crée ainsi un plasma. Le plasma est formé à partir d'une source de carbone et d'une source d'oxygène. La source de carbone est, de préférence, du dioxyde de carbone (CO₂). Elle peut être également un composé de formule CₓH_{y} avec x≥1 et y≥1, C₂H₂ par exemple. La source d'oxygène est, de préférence, de l'eau (H₂O) ou du dioxygène (O₂).

Lorsqu'on utilise du dioxygène et du dioxyde de carbone, la réaction chimique du plasma avec le lithium métallique s'effectue selon les deux réactions suivantes :

4 Li ₍ₛ₎ + O_{2 (g)} → 2Li₂O ₍ₛ₎

Li₂O ₍ₛ₎ + CO_{2 (g)} → Li₂CO_{3 (s)}

Le lithium solide réagit dans un premier temps avec le dioxygène gazeux pour former un oxyde de lithium solide Li₂O. Dans un second temps, l'oxyde de lithium solide Li₂O réagit avec le dioxyde de carbone gazeux pour former du carbonate de lithium solide Li₂CO₃.

Le film de Li₂CO₃ obtenu à l'issue de ces réactions est ensuite dissous dans un bain aqueux. L'étape de dissolution met en évidence la quasi-absence de dégagement gazeux, caractéristique de la réactivité du lithium avec l'eau. En effet, les réactions étant quasi-totales, la quantité de lithium métallique n'ayant pas réagi est infime.

Un chauffage peut être appliqué au support afin d'augmenter la cinétique des réactions mises en jeu. Le support est donc, de préférence, chauffé à une température comprise entre 20 et 200°C.

L'étape d'application du plasma, appelée également étape de stabilisation, s'effectue, par exemple, à une pression de l'ordre de 233mTorr, à une température de 100°C pendant 20 minutes. Les débits de gaz sont de l'ordre de 1,1 litre standard par minute (SLM, « standard liters per minute » en anglais) pour le dioxyde de carbone et de l'ordre de 5 litres standards par minute pour le dioxygène. Le plasma est produit au moyen d'un signal de courant alternatif de type radiofréquence et la puissance appliquée qui en résulte est, de préférence, comprise entre 50W et 400W. Le plasma peut être également de type basse fréquence, continu ou continu-pulsé.

A titre d'exemple, ce procédé a été utilisé pour éliminer une couche de lithium de 3µm d'épaisseur sur un substrat Si/SiO₂ (1000 Å) / Si₃N₄ (3000 Å).

Le procédé permet ainsi de transformer le lithium métallique en carbonate de lithium Li₂CO₃, qui est un composé solide stable à l'air et à l'eau. L'absence de transfert des masques entre le bâti de dépôt et le bâti de nettoyage réduit les risques de réaction du lithium avec l'atmosphère. La consigne de sécurité est donc respectée. De plus, la cinétique de réaction est élevée, permettant un procédé rapide, et donc favorisant une cadence élevée.

Le procédé s'applique à l'élimination du lithium dans diverses applications. Il est particulièrement intéressant pour le nettoyage d'un support formant un masque mécanique employé pour la fabrication des micro-batteries au lithium. Étant donné la nature des gaz réactifs et les matériaux des masques, le procédé n'endommage pas les masques mécaniques. Le procédé peut aussi s'appliquer au nettoyage des chambres de dépôt de lithium.

Enfin, le procédé génère du carbonate de lithium Li₂CO₃ en solution aqueuse, qui peut être recyclé pour un usage ultérieur.

## Revendications

1. Procédé d'élimination de lithium métallique sur un support, comprenant une étape d'application d'un plasma, **caractérisé en ce que** le plasma est formé à partir d'une source de carbone et d'une source d'oxygène et transforme le lithium métallique en carbonate de lithium et **en ce que** le procédé comporte une étape de dissolution du carbonate de lithium dans une solution aqueuse.

2. Procédé d'élimination selon la revendication 1, **caractérisé en ce que** l'application du plasma est réalisée à une puissance comprise entre 50W et 400W.

3. Procédé d'élimination selon l'une des revendications 1 et 2, **caractérisé en ce que** la source de carbone est du dioxyde de carbone et la source d'oxygène est du dioxygène.

4. Procédé d'élimination selon l'une quelconque des revendications 1 et 3, **caractérisé en ce que** le support est chauffé à une température comprise entre 20 et 200°C.

5. Procédé d'élimination selon l'une quelconque des revendications 1 à 4, **caractérisé en ce que** le support est un masque mécanique utilisé dans la fabrication de batteries au lithium.

## Claims

1. Method for eliminating metallic lithium on a support, comprising a plasma application step, **characterized in that** the plasma is formed from a carbon source and an oxygen source and transforms the metallic lithium into lithium carbonate and **in that** the method comprises a dissolution step of the lithium carbonate in an aqueous solution.

2. Method for eliminating according to claim 1, **characterized in that** application of the plasma is performed at a power comprised between 50W and 400W.

3. Method for eliminating according to one of claims 1 and 2, **characterized in that** the carbon source is carbon dioxide and the oxygen source is diatomic oxygen.

4. Method for eliminating according to one of claims 1 and 3, **characterized in that** the support is heated to a temperature comprised between 20 and 200°C.

5. Method for eliminating according to any one of claims 1 to 4, **characterized in that** the support is a mechanical mask used in fabrication of lithium batteries.

## Patentansprüche

**1.** Verfahren zur Entfernung von metallischem Lithium auf einem Träger, das einen Schritt des Aufbringens eines Plasmas umfasst, **dadurch gekennzeichnet, dass** das Plasma auf Basis einer Kohlenstoffquelle und einer Sauerstoffquelle gebildet wird und das metallische Lithium in Lithiumkarbonat umwandelt, sowie dadurch, dass das Verfahren einen Schritt der Auflösung des Lithiumkarbonats in einer wässrigen Lösung umfasst.

**2.** Entfernungsverfahren nach Anspruch 1, **dadurch gekennzeichnet, dass** das Aufbringen des Plasmas bei einer Leistung von 50 bis 400 W erfolgt.

**3.** Entfernungsverfahren nach einem der Ansprüche 1 und 2, **dadurch gekennzeichnet, dass** die Kohlenstoffquelle Kohlenstoffdioxid und die Sauerstoffquelle Sauerstoff ist.

**4.** Entfernungsverfahren nach einem der Ansprüche 1 und 3, **dadurch gekennzeichnet, dass** der Träger auf eine Temperatur von 20 bis 200°C erhitzt wird.

**5.** Entfernungsverfahren nach einem der Ansprüche 1 bis 4, **dadurch gekennzeichnet, dass** der Träger eine mechanische Maske ist, die bei der Herstellung von Lithiumbatterien eingesetzt wird.
